# EUROPEAN PATENT SPECIFICATION

(11) **EP 0 631 259 B1**
(45) Date of publication and mention of the grant of the patent: **17.02.1999**
(21) Application number: 94304456.0
(22) Date of filing: 20.06.1994
(51) Int. Cl.: G07C 9/00, G06K 7/10

(54) **Remote object identification system**
Fernidentifizierungssystem für Gegenstände
Système d'identification à distance d'objets

(30) Priority: 23.06.1993 US 81729
(43) Date of publication of application: 28.12.1994
(73) Proprietor: XEROX CORPORATION, Rochester, New York 14644 (US)
(72) Inventor: Want, Roy, Mountainview, California 94043 (US)
(74) Representative: Skone James, Robert Edmund

(56) References cited:
- FR-A- 2 565 720
- FR-A- 2 667 183
- FR-A- 2 673 743
- US-A- 4 688 026
- PATENT ABSTRACTS OF JAPAN vol. 16 no. 402 (P-1409) ,25 August 1992 & JP-A-41 034203 (TOHO GAS CO LTD) 8 May 1992,

## Description

This invention relates to a remote object identification system, and in particular to a system employing optical radiation for determining the presence in a room or other enclosure of certain objects.

A great deal of time can be wasted in the home or in a work environment searching for objects in a room that may be crowded with many other objects The problem is aggravated where the work environment includes a number of rooms which the object may be located. An example is a laboratory containing a number of separate rooms where scientific activities are carried on using valuable portable objects such as oscilloscopes and multimeters, often carried from room to room Researchers who wish to use such equipment can waste valuable time conducting a search relying on eyesight to locate the desired equipment.

Existing remote identification methods are based on radiotransmission devices. These are expensive and susceptible to electronic and electromagnetic interference, a serious problem in a research laboratory using such electronic test equipment and/or computer monitors which are known to generate much electromagnetic interference.

Another remote identification system is in common use in checkout counters at supermarkets, and is based on light scanners reflecting light from UPC bar codes on products. The deficiency here is that the bar code usually cannot be more than 6 inches from the scanner, which is not practical to identify devices located at distances associated with typical home room dimensions or office space.

FR-A-2 667 183 discloses a remote object identifying system using optical radiation. The system of FR-A-2 667 183 comprises means for generating a first beam of optical radiation and one or more devices in an area or in separate areas and positioned to receive the first beam. Each of said devices has associated with it means for receiving the first beam and decode a code modulated on the first beam. Upon decoding a predetermined code the device activates an optical or acoustic signalling device to indicate to a user the position of an object associated with the device.

An object of the invention is to provide a remote identification system using identifier devices which are small. inexpensive and consume little energy.

Another object of the invention is a remote identification system substantially free from electronic or electromagnetic interference.

Still another object of the invention is a remote identification system capable of operating over distances involving small and large rooms, factory floors, and even between closely located buildings.

The present invention provides a remote object identifying system comprising:
a) means for generating a first beam of optical radiation,
b) means for detecting a second beam of modulated optical radiation,
c) one or more devices in an area and positioned to receive the first beam, each of said devices having associated with it means for receiving the first beam and in response thereto means for producing the second beam,
d) said means for producing the second beam comprising a reflector for said the first beam, and means for uncovering and covering the reflector in a predetermined sequence to form by reflections of the first beam the second beam modulated in accordance with the predetermined sequence.

The remote identification system of the present invention uses optical radiation, in particular, infrared light, to transmit and to receive identification code sequences unique to each object. The code sequence when decoded will identify the object transmitting the code and indicate its location.

In accordance with a preferred embodiment of the invention, a base station interrogator is provided in each room where objects are to be located. The base station interrogator is provided with means to illuminate the room with pulses of infrared light. The devices are each provided with controllable light reflectors, which in response to the incident light pulses, uncover and cover the reflectors in a unique code sequence which transmits back to the base station coded light reflections which the base station can receive, decode, and process to identify the object. The base station located in the room and receiving the coded sequences identifies the room of the location of the object. The base station can be connected with other base stations in other rooms to a computer host to perform the tasks of illuminating each room from time to time, processing the coded light flashes and using the thus obtained information to maintain a database of objects and their room locations.

The invention further provides a device for attachment to an object for locating the object, according to claim 5 of the appended claims.

The invention further provides a remote object identifying system according to claim 6 of the appended claims.

The above and further objects, details and advantages of the present invention will become apparent from the following detailed description of preferred embodiments thereof, when read in conjunction with the accompanying drawings, in which:
Fig. 1 is a block diagram of a typical remote identification systems in the invention;
Fig. 2 is an enlarged schematic view of part of the system of Fig. 1;
Fig. 3 is a detailed schematic view of parts of the system of Fig. 2.
Fig. 4A shows a system of the invention with four schematic devices, and Figs. 4B-4F show waveforms of a typical operating session of the system of Fig. 4A; and
Fig. 5 is a block diagram of another embodiment of a system in accordance with the invention.

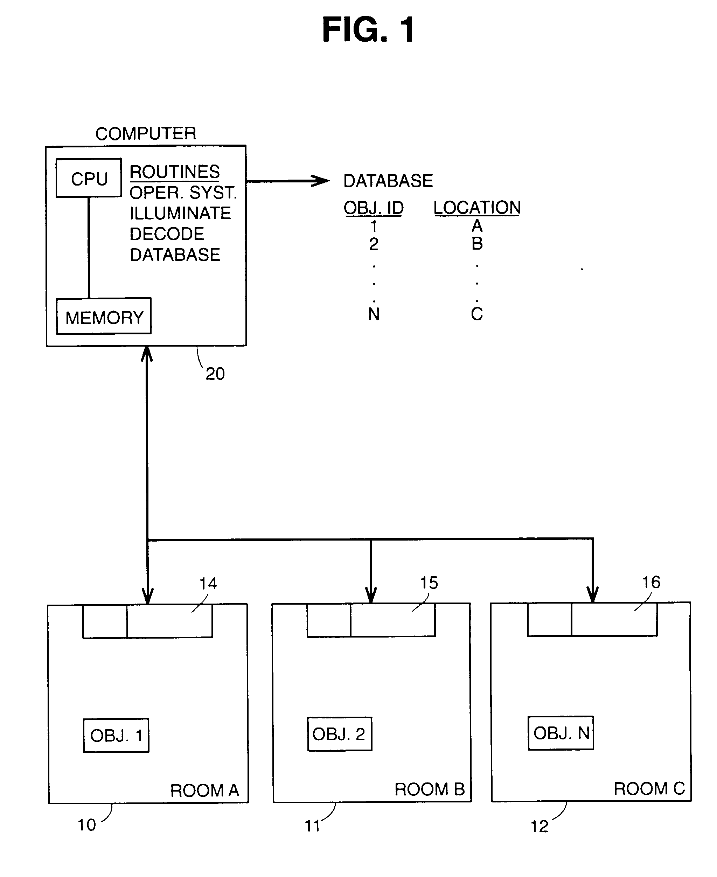

Fig. 1 shows a typical environment for the system of the invention. It comprises three rooms 10, 11, 12, identified as Room A, Room B and Room C. Each contains one or more portable objects to be identified and located. Room A contains object 1, Room B contains object 2, and Room C contains object N. Only the three objects are shown for simplicity but each room would typically contain many more objects. Each room also contains a base station 14, 15, 16 connected to a common host computer 20. The latter is a conventional PC or workstation, provided with the usual CPU and memory, and a series of routines for operating the system to create and maintain a database of each object in the system and its room location.

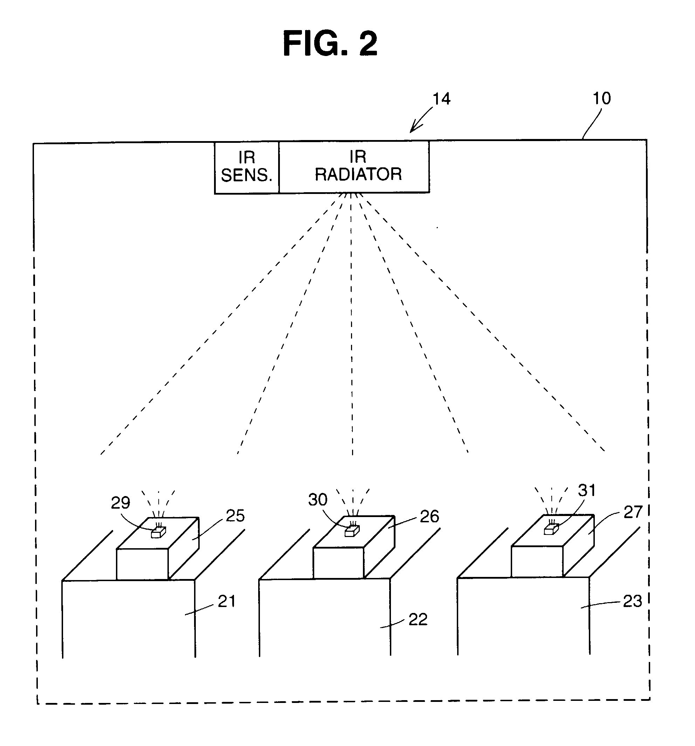

Fig. 2 is an enlarged view of Room A 10 containing in this case three shelves or other support means 21 - 23 for three objects 25 - 27. Each object has associated with it or is tagged with a device 29 - 31 in accordance with the invention. The devices can be permanently adhered to each object, or attached by VELCRO or by magnets.

Briefly the operation of the preferred embodiment of Figs. 1 and 2 is as follows. Each object that you want to be able to identify sports a tag in it or on it. Each tag is assigned a unique code sequence that can be "read" by a tag interrogator. This interrogator scans all the tagged objects in the room, identifying them by their code sequences. These codes can, if desired, be similar to the codes contained in the UPC stickers placed on consumer products. The system uses pulse modulation techniques to encode and decode the transmitted data; it looks at ambient levels of IR signals coming back to it. In a room filled with tagged objects, there's always something flashing to reflect its IR source. The IR source can be achieved via a bank of IR LED emitters, while the detector in the interrogator can be an IR LED photodiode.

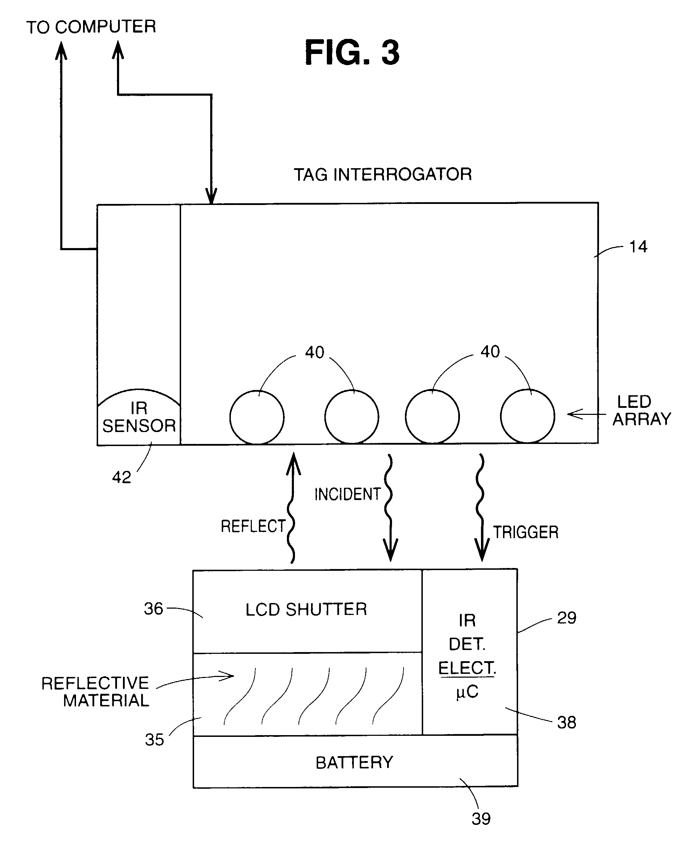

Fig. 3 is an enlarged view of a typical base station or interrogator 14 and object tag 29. A feature of the invention is that the tag 29 is small, inexpensive, and consumes little power. This is achieved by constituting the transmitting part of the tag of a passive material, more specifically, a good reflector 35 for infrared light, covered by a liquid crystal display (LCD) shutter 36, which in response to electrical signals can be made partly transmissive. The operation is simple. Exposing or uncovering the reflector 35 by making the shutter 36 transmissive will cause infrared light from the base station 14 to be reflected back to the base station 14. Covering the reflector 35 by making the shutter 36 black will block the refections. The LCD 36 behaves like a camera lens shutter. In response to appropriate electrical signals, it can be moved quickly from a transmissive or clear condition to a black condition in a unique code sequence. For example, one such code sequence may be clear/black/clear/ clear/black, which translates into a digital code of 10110. A 5bit code would accommodate 32 unique code sequences or 32 unique object lds.

The passive part of the tag 29 simply consists of several layers of material, in which the highly reflective material 35 can be similar to that used in reflective tags in clothing. The LCD shutters 36 are commercially available, and can be a primitive version of a digital watch LCD faceplate.

The system also requires a way of controlling activation of the LCD shutter 36, normally held in the non-reflective or black condition. This is achieved by an electronic module 38 containing an IR detector, such as a photodiode or phototransistor connected to electronics to provide in response to incident triggering radiation from the base station 14 a signal to activate a primitive microcontroller having a small built-in program containing a random delay factor before generating the electrical signals which when applied to the LCD 36 will cause the LCD to exercise its unique code sequence. In other words, each time the IR detector senses an IR pulse from the base station, after a random delay, the microcontroller outputs to the LCD shutter the signal sequence to produce the coded clear/black reflecting sequence, and then shuts off, until the next trigger or activating light pulse from the base station is received. The system consumes little energy and is easily powered by a battery, such as a watch battery, or by a solar panel if the room remains lit, or by both.

The host station 14 needs only an array of LEDs 40 to be able to illuminate the entire room so that sufficient IR radiation reaches each tag to activate and to reflect back enough IR power to be detected by a sensitive IR sensor 42, which again may be a photodiode or phototransistor connected to electronics to convert the coded IR reflections into its digital code.

The host computer 20 is easily programmed in a straightforward way to activate each base station in turn and process the digital codes returned by each base station, each code received representing the presence in the room containing the base station of the object associated with a particular tag. It is straightforward to use this data to create and maintain a database identifying with each room containing its own base station the lds of the objects located therein.

The tag interrogator 14 can be implemented as shown as a small base station permanently mounted in a corner of a room, in such a way that there's an optical line of sight between it and various tags. This interrogator can be configured so as to fire its flash when commanded to do so by the host computer, or by a internal microcontroller, or automatically at fixed intervals. Alternatively, the interrogator 14 can be installed in the end of a portable gun-like pointing device that is manually "fired" by a user at a bookshelf or workbench to find a particular tagged object.

One simple inexpensive way to control the shutter 36 is to incorporate an inexpensive 4-bit microcontroller held in reset condition by a signal from the battery source, with internal amplifiers operating a switch to release the reset condition to cause the microcontroller to execute a simple built-in program that sends a sequence of signals to the LCD shutter on the device to flash it in the predetermined code of clear and black conditioning or of long and short flashes equivalent to a UPC bar code. Each tag 29 would be programmed with its own unique code pattern. The host computer 20 could easily store in its memory the database comprising the codes for each device and its current location, obtained by periodically activating the system. A simple comparison test of received codes to those stored in the database would allow periodic updating of the database. The above is straightforward programming well within the skills of the average programmer.

As one example, not meant to be limiting, computer-controlled LEDs in the IR source 14 flash every three seconds The detector 42 in the interrogator looks for changes of what is reflected in the room Sensitive electronics including, for example, a highgain amplifier, converts the detector's analog signals to a digital representation that the host computer then decodes into the ID associated with the tag that is modulating the signal.

Summarizing, the interrogator that "fires" light identifies objects by their responding tag shutter actions. This tag interrogation results in the transmission of ID codes: the interrogator reads the shutter actions, decodes them, and presents a user with information.

The ability to identify remote objects is useful in many ways, for example:

Using associated software on a computer workstation, a user types in the title of a book that he or she needs to locate. Then, he or she aims the interrogator "gun" at the bookshelves The device looks up the book's ID code, then looks to see if the tag that corresponds to that code is detected on the bookshelf. It then outputs a textual response on its small (one-line) LCD to let the user knows it's there; or, it could transmit that information to a display on the user's workstation screen; or, it could flash a green LED when its light beam comes in direct line-of-sight with the book's tag.

As another example, a user needs to find a soldering iron The user enters "find soldering iron" into the software on the workstation. Tag interrogation units are networked (e.g., by Ethernet) throughout the building, and interrogators in all rooms then look for the soldering iron tag The system then outputs a message on the workstation which says that the soldering iron, for example, is in a lab down the hall.

As still another example, the base station continuously flashes invisible IR light and tracks all objects that it senses. thereby building a database of the location of tagged objects. To identity objects, it compares their tag codes to the list of codes for all tagged items in that room which are stored in the host workstation memory It also tracks tagged items in all other rooms because the detection system is connected on a distributed network When a particular book is needed, the associated software can be used to enter the book title and the system responds with the message " book is in Lab 2."

A further feature of the invention is the random delays built into each tag The reason is that, if the room contains multiple objects with multiple tags, they would essentially all become activated at that same time when the base station interrogator broadcasts its triggering pulses If the delay were absent, all would simultaneously reflect back to the interrogator their unique flash pattern and it would be difficult if not impossible to separate the signals due to individual transmissions "colliding" at the interrogator sensor By introducing random delays, each tag responds in a random time period. While some tag code transmissions may still collide (in which event the host computer can discard the data), due to the random starting times, the ones that collided would likely not collide again on the next or some subsequent triggering pulse. By programming the computer to ignore ambiguous data due to collisions -- equivalent to a standard sanity check (checksum) routine included in many data processing programs -- and flashing the interrogator enough times, eventually all of the objects in the room can be identified. It will be noted that time is not of the essence in the system. The objects are not in motion and may reside in a particular room for long intervals.

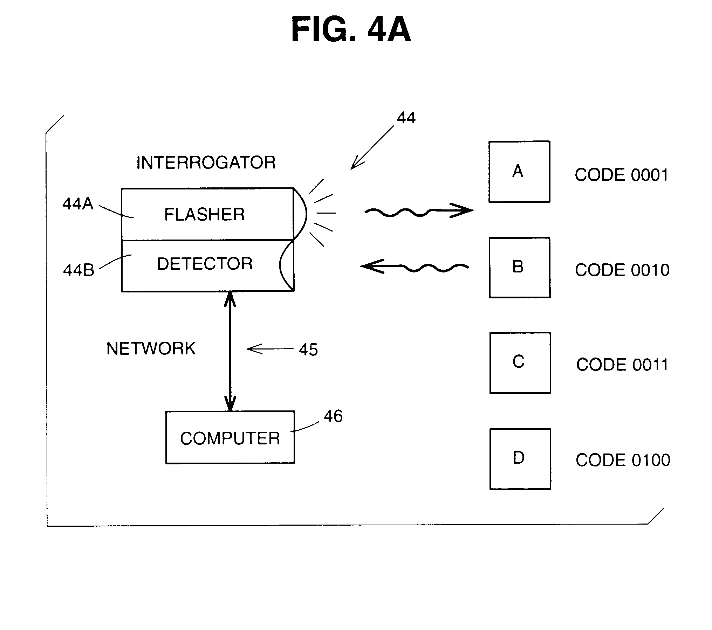

To illustrate one way, not to be considered limiting, of using the invention in a simple application involving four devices, reference is made to Fig. 4A which schematically illustrates an interrogator 44 comprising a flasher 44A and detector 44B connected by a suitable network 45 to a computer 46 which controls the flashing of the flashes 44A and processes the signals received from the detector 44B. The four devices are represented by boxes labelled A-D, each of which corresponds to 29 in Fig. 3, and next to each is the assigned ID codes. The figure gives an example using 4-bit encoded tags. This only allows for 16 possible items that can be tagged in the system. If 16 bit codes were used, 65536 items could be tagged. A large number of bits is clearly beneficial for a practical system. If 64 bits were used every book in the world could be tagged. However, such a large number of bits means a greater period of time to transmit the data at any given data rate, and thus more chance of collision and more chance of data errors. For most situations, 16 bits will be enough.

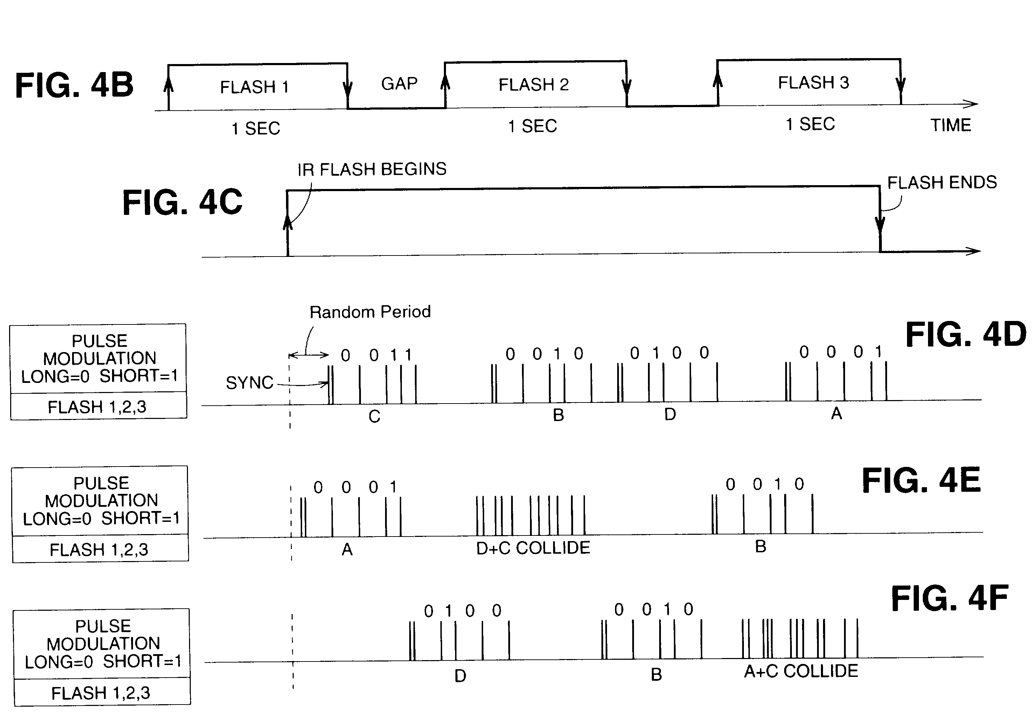

Fig. 4B shows an example of one suitable flash rate of the flasher 44A, each one second long with a gap between each. The size of the gap is not critical, and is used simply to separate the IR flashes during which the reflected signals are received. The gap period could be up to three seconds or more depending on the rate of interrogation required.

Fig. 4C is an enlarged view of Flash 1. The other flashes would be the same. Figs. 4D-4F show the detected IR reflections during the time of Flash 1, Flash 2 and Flash 3, respectively. The signals flashed back by the optical tags send data represented as the gap between brief flashes of reflected light. A very short gap indicates a sync pulse, a long gap is a logic zero and a medium gap is a logic one. For tags with more bits, a different encoding scheme could be used. If 16 different gap widths could be sent back, 4 bits of data could be sent with every pair of pulses. Thus 16 bits could be sent with only a sync pulse + 8 pulses and would be superior scheme to the example given. The invention is not limited to the encoding schemes described. The active intervals are preceded by the sync double pulse obtained by a rapid OPENCLOSE-OPEN-CLOSE of the shutter 36. The random nature of the responses is shown by the arbitrary locations along the time axis of the starting sync sequence. The reflected responses of the devices A-D are indicated below the time axis.

Fig. 4D shows the receipt during Flash 1 of good data from the four devices, because each of their reflected responses are time spaced and can be easily separated and decoded. As each tag responds at a random time, different tags may collide with each other during different flashes. Fig. 4E shows the responses from devices D and C colliding during Flash 2 and Fig. 4F shows the responses from the devices A and C colliding during Flash 3. Over time, all the tags will be seen.

It is clearly beneficial to transmit the data from a tag to the interrogator as quickly as possible because it reduces the chance of data collisions and increases the number of tags that can successfully reply at any interrogation period. Thus, it is desirable to provide an interval for each of the flashes sufficiently long to receive the separated reflected responses from all of the devices present in the area.

The main limitation of the flash speed will be the rate at which the LCD material can change from black to clear and back again. It is thus desirable to use for the shutter an LCD material that can change from black to clear to black as rapidly as possible. While the LCD is preferred because of low cost, other classes of electro-optical materials that have this capability can be substituted for the LCD material.

The technologies required to implement the active optical tag system can be purchased and assembled, easily and inexpensively, in large numbers. A key notion is the tagging and invisible tracking of portable objects in an unobtrusive and inexpensive manner. This approach will provide an important enabling technology for use in reactive environments.

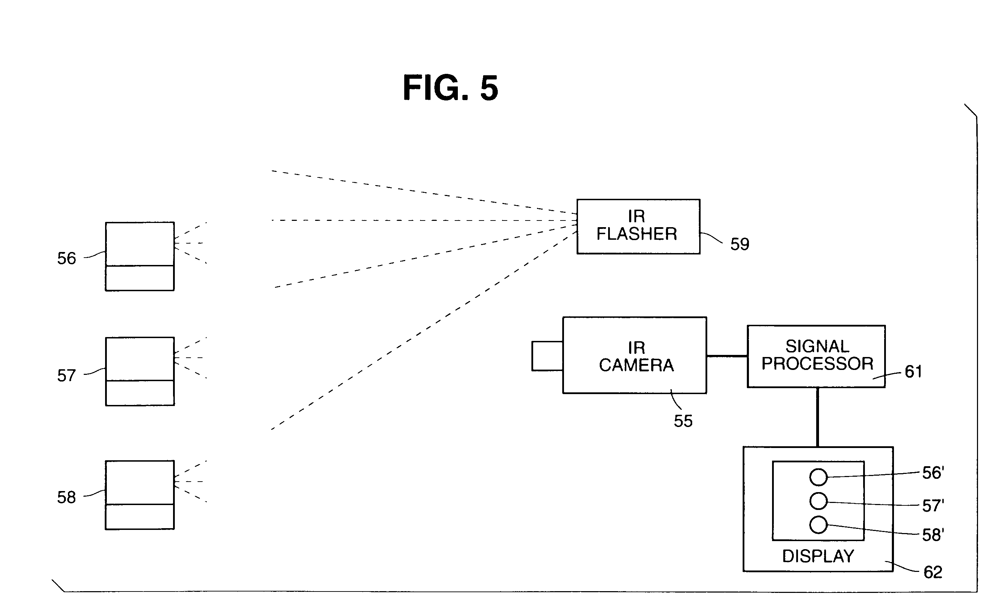

An alternative implementation, illustrated in Fig. 5 involves using a CCD video camera 55 to scan different parts of its fieldof-view in a room containing tagged objects 56-58. Upon illumination by a broadcasting IR radiator 59, the tags cause lights to flicker at the back of the camera lens in a spatial setup corresponding to that of the tagged objects 56-58. After processing 61, an image is outputted on workstation display 62, allowing the user to locate the objects by their spatial location 56', 57', 58' on the display 62.

Advantages of the system of the invention using IR and LCD technology over traditional light-and-radio-based identification systems include:
1) Ability to implement in small, inexpensive tags;
2) Ability to transmit signals which are not susceptible to electronic/electromagnetic interference;
3) Ability to be more easily confined to a limited area (small, free-space environments such as large office rooms, factory floors and even between closely located buildings); and
4) Ability to identify objects from a considerable distance (as opposed to UPC-type checkout counter scanner).

## Claims

1. A remote object identifying system comprising:
a) means (40 ; 44A ; 59) for generating a first beam of optical radiation,
b) means (42 ; 44B ; 55) for detecting a second beam of modulated optical radiation,
c) one or more devices (29) in an area and positioned to receive the first beam, each of said devices having associated with it means for receiving the first beam and in response thereto means for producing the second beam,
d) said means for producing the second beam comprising a reflector (35) for said first beam, and means (36) for uncovering and covering the reflector in a predetermined sequence to form by reflections of the first beam the second beam modulated in accordance with the predetermined sequence.

2. The system of claim 1, further comprising means (38) for applying signals to said uncovering and covering means (36) to cause it to alternate in its transmissive and black conditions in the predetermined sequence.

3. The system as claimed in claim 1 or 2, wherein the means for generating a first beam comprises an IR radiator, and preferably an array of LEDs (40).

4. The system as claimed in any of claims 1 to 3, wherein plural devices are provided, each device having means for delaying the starting time of the means for uncovering and covering

5. A device (29) for attachment to an object for locating the object, said device comprising:
a) a reflector for IR radiation (35),
b) a LCD shutter (36) covering the reflector and in response to electrical signals transforming from a normally non-transmissive condition to a transmissive condition,
c) means for sensing incident IR radiation,
d) means (38) in response to the sensing means sensing incident radiation for providing electrical signals to the LCD shutter to cause it to alternate between its non-transmissive and transmissive conditions in a predetermined sequence.

6. A remote object identitifying system comprising:
a) means (40 ; 44A; 59) for generating a first beam of optical radiation,
b) means (42 ; 44B ; 55) for receiving a second beam of modulated optical radiation,
c) at least two separate areas.
d) one or more devices (29) in each of said separate areas and positioned to receive the first beam, each of said devices having associated with it means for receiving the first beam and in response thereto means for producing the second beam, said means for producing the second beam comprising a reflector (35) for said first beam, and means (36) for exposing and covering the reflector in a predetermined sequence to the first beam thereby to create the second beam modulated in accordance with the predetermined sequence.

7. The system of claim 6, wherein the predetermined sequence is unique to each device, and the means of element (b) comprises means for decoding the modulated beam from each device for identifying the device

8. The system of claim 7, further comprising random delay means associated with the means (36) for exposing and covering the reflector of each device, whereby the start time of the predetermined sequence is randomly delayed.

9. The system of any or the preceding claims, further comprising means (20 ; 46 ; 61) connected to a base station for creating and maintaining a database of device identification and their area location from information derived from the second beam in each area

10. The system of claim 8 or 9, wherein the means for generating the first beam includes means (40 ; 44A ; 59) for periodically flashing the first beam so that the interval is sufficiently long to receive separated in time all of the modulated second beams from devices in each of the separate areas.

11. The system as claimed in any of the preceding claims, wherein the means of elements (a) and (b) comprises a non-portable base station, preferably located in each separate area, or a portable gun-like device, and preferably wherein said means of element (b) comprises a CCD camera (55) located in each area or viewing the positions of the devices in each area

## Patentansprüche

1. Fernobjektidentifikationsystem mit:
a) einer Einrichtung (40; 44A; 59) zum Erzeugen eines ersten optischen Strahls,
b) einer Einrichtung (42; 44B; 55) zum Feststellen eines zweiten modulierten optischen Strahls,
c) einer oder mehreren Vorrichtungen (29), die in einem Bereich zum Empfangen des ersten Strahls angeordnet sind, wobei jede der Vorrichtungen mit einer Einrichtung zum Empfangen des ersten Strahls sowie mit einer Einrichtung zum Erzeugen des zweiten Strahls in Antwort auf das Empfangen des ersten Strahl assoziiert ist,
d) wobei die Einrichtung zum Erzeugen des zweiten Strahls einen Reflektor (35) für den ersten Strahl und eine Einrichtung (36) zum Abdecken und Bedecken des Reflektors in einer vorbestimmten Sequenz umfaßt, um durch Reflektieren des ersten Strahls den in Übereinstimmung mit der vorbestimmten Sequenz modulierten zweiten Strahl zu erzeugen.

2. System nach Anspruch 1, das weiterhin eine Einrichtung (38) zum Anlegen von Signalen an der Einrichtung (36) zum Abdecken und Bedecken umfaßt, damit diese in Übereinstimmung mit einer vorbestimmten Sequenz zwischen einem durchlässigen und einem schwarzen Zustand wechselt.

3. System nach Anspruch 1 oder 2, wobei die Einrichtung zum Erzeugen eines ersten Strahls einen Infrarot-Strahler und vorzugsweise eine Anordnung aus LEDs (40) umfaßt.

4. System nach wenigstens einem der Ansprüche 1 bis 3, wobei mehrere Vorrichtungen vorgesehen sind, die jeweils eine Einrichtung zum Verzögern der Startzeit der Einrichtung zum Abdecken und Bedecken umfassen.

5. Vorrichtung (29) für die Verbindung mit einem Objekt, um das Objekt zu lokalisieren, wobei die Vorrichtung umfaßt:
a) einen Reflektor (35) für Infrarotstrahlung,
b) einen LCD-Verschluß (36), der den Reflektor bedeckt und in Antwort auf elektrische Signale von einem normalen nicht-durchlässigen Zustand zu einem durchlässigen Zustand wechselt,
c) eine Sensoreinrichtung zum Feststellen von einfallender Infrarotstrahlung,
d) eine Einrichtung zum Vorsehen von elektrischen Signalen für den LCD-Verschluß in Antwort auf die durch die Sensoreinrichtung festgestellte einfallende Strahlung, um den LCD-Verschluß dazu zu veranlassen, in einer vorbestimmten Sequenz zwischen seinem nicht-durchlässigen und seinen durchlässigen Zustand zu wechseln.

6. Fernobjektidentifikationssystem mit:
a) einer Einrichtung (40; 44A; 59) zum Erzeugen eines ersten optischen Strahls,
b) einer Einrichtung (42; 44B; 55) zum Empfangen eines zweiten modulierten optischen Strahls,
c) wenigstens zwei separaten Bereichen,
d) einer oder mehreren Vorrichtungen (29), die in jedem der separaten Bereiche angeordnet sind, um den ersten Strahl zu empfangen, wobei jede der Vorrichtungen mit einer Einrichtung zum Empfangen des ersten Strahls und mit einer Einrichtung zum Erzeugen des zweiten Strahls in Antwort auf das Empfangen der ersten Strahls verbunden ist, wobei die Einrichtung zum Erzeugen des zweiten Strahls einen Reflektor (35) für den ersten Strahl und eine Einrichtung (36) zum Abdecken und Bedecken der Reflektors in einer vorbestimmten Sequenz umfaßt, um dadurch den in Übereinstimmung der vorbestimmten Sequenz modulierten zweiten Strahl zu erzeugen.

7. System nach Anspruch 6, wobei die vorbestimmte Sequenz für jede Vorrichtung einzigartig ist und wobei die Einrichtung von Punkt (b) eine Einrichtung zum Decodieren des modulierten Strahls von jeder Vorrichtung umfaßt, um diese zu identifizieren.

8. System nach Anspruch 7, wobei die Einrichtung (36) zum Abdecken und Bedecken des Reflektors in jeder Vorrichtung eine Zufallsverzögerungseinrichtung umfaßt, die die Startzeit der vorbestimmten Sequenz zufällig verzögert.

9. System nach wenigstens einem der vorstehenden Ansprüche, das weiterhin eine mit einer Basisstation verbundene Einrichtung (20; 46; 61) umfaßt, um eine Datenbank für die Identifikation und die Position der Einrichtungen aus der vom zweiten Strahl in jedem Bereich erhaltenen Information zu erstellen und aufrechtzuerhalten.

10. System nach Anspruch 8 oder 9, wobei die Einrichtung zum Erzeugen des ersten Strahls eine Einrichtung (40; 44A; 59) zum periodischen Blitzen des ersten Strahls umfaßt, wobei das Intervall ausreichend lange ist, um zeitlich getrennt alle modulierten zweiten Strahlen aus den Vorrichtungen in jedem der separaten Bereiche zu empfangen.

11. System nach wenigstens einem der vorstehenden Ansprüche, wobei die Einrichtungen der Punkte (a) und (b) vorzugsweise jeweils in jedem separaten Bereich vorgesehene nicht tragbare Basisstationen oder eine tragbare, einem Gewehr ähnliche Einrichtung umfassen, wobei vorzugsweise die Einrichtung von Punkt (b) jeweils in jedem Bereich vorgesehene CCD-Kameras (55) umfaßt, um die Positionen der Vorrichtungen in jedem Bereich zu festzustellen.

## Revendications

1. Système d'identification d'objets à distance comprenant :
a) un moyen (40 ; 44A ; 59) destiné à générer un premier faisceau de rayonnement optique,
b) un moyen (42 ; 44B ; 55) destiné à détecter un second faisceau de rayonnement optique modulé,
c) un ou plusieurs dispositifs (29) dans une zone et positionnés de façon à recevoir le premier faisceau, chacun desdits dispositifs comportant associé à lui un moyen destiné à recevoir le premier faisceau et en réponse à celui-ci un moyen destiné à produire le second faisceau,
d) ledit moyen destiné à produire le second faisceau comprenant un réflecteur (35) pour ledit premier faisceau, et un moyen (36) destiné à découvrir et à couvrir le réflecteur selon une séquence prédéterminée afin de former par réflexions du premier faisceau le second faisceau modulé conformément à la séquence prédéterminée.

2. Système selon la revendication 1, comprenant en outre un moyen (38) destiné à appliquer des signaux audit moyen destiné à découvrir et couvrir (36) afin de l'amener à alterner ses états transmetteurs et noirs selon la séquence prédéterminée.

3. Système selon la revendication 1 ou 2, dans lequel le moyen destiné à générer le premier faisceau comprend un système de rayonnement infrarouge, et de préférence un réseau de diodes électroluminescentes (LED) (40).

4. Système selon l'une quelconque des revendications 1 à 3, dans lequel plusieurs dispositifs sont prévus, chaque dispositif possédant un moyen destiné à retarder le moment de démarrage du moyen destiné à découvrir et à couvrir.

5. Dispositif (29) destiné à être fixé à un objet afin de localiser l'objet, ledit dispositif comprenant :
a) un réflecteur de rayonnement infrarouge (35),
b) un obturateur à cristaux liquides (LCD) (36) couvrant le réflecteur et en réponse à des signaux électriques passant d'un état non-transmetteur normal à un état transmetteur,
c) un moyen destiné à détecter un rayonnement infrarouge incident,
d) un moyen (38) en réponse au moyen de détection détectant le rayonnement incident afin de procurer des signaux électriques à l'obturateur à cristaux liquides (LCD) afin de l'amener à basculer entre ses états non-transmetteurs et transmetteurs selon une séquence prédéterminée.

6. Système d'identification d'objets à distance comprenant :
a) un moyen (40 ; 44A ; 59) destiné à générer un premier faisceau de rayonnement optique,
b) un moyen (42 ; 44B ; 55) destiné à recevoir un second faisceau de rayonnement optique modulé,
c) au moins deux zones séparées,
d) un ou plusieurs dispositifs (29) dans chacune desdites zones séparées et positionnés de façon à recevoir le premier faisceau, chacun desdits dispositifs comportant associé à lui un moyen destiné à recevoir le premier faisceau et en réponse à celui-ci un moyen destiné à produire le second faisceau, ledit moyen destiné à produire le second faisceau comprenant un réflecteur (35) pour ledit premier faisceau, et un moyen (36) destiné à exposer et à couvrir le réflecteur selon une séquence prédéterminée pour le premier faisceau en créant ainsi le second faisceau modulé conformément à la séquence prédéterminée.

7. Système selon la revendication 6, dans lequel la séquence prédéterminée est particulière à chaque dispositif, et le moyen de l'élément (b) comprend un moyen destiné à décoder le faisceau modulé provenant de chaque dispositif afin d'identifier le dispositif.

8. Système selon la revendication 7, comprenant en outre un moyen de retard aléatoire associé au moyen (36) destiné à exposer et à couvrir le réflecteur de chaque dispositif, grâce à quoi l'instant de début de la séquence prédéterminée est retardé de façon aléatoire.

9. Système selon l'une quelconque des revendications précédentes, comprenant en outre un moyen (20 ; 46 ; 61) relié à une station de base destinée à créer et à conserver une base de données d'identification de dispositifs et de localisation de leurs zones à partir des informations obtenues à partir du second faisceau se trouvant dans chaque zone.

10. Système selon la revendication 8 ou 9, dans lequel le moyen destiné à générer le premier faisceau comprend un moyen (40 ; 44A ; 59) destiné à émettre périodiquement le premier faisceau sous forme d'éclairs de façon à ce que l'intervalle soit suffisamment long pour recevoir séparément au cours du temps l'ensemble des seconds faisceaux modulés provenant des dispositifs se trouvant dans chacune des zones séparées.

11. Système selon l'une quelconque des revendications précédentes, dans lequel le moyen des éléments (a) et (b) comprend une station de base non portable, de préférence située dans chaque zone séparée, ou un dispositif portable semblable à une arme, et de préférence dans lequel ledit moyen de l'élément (b) comprend une caméra à dispositif à couplage de charges CCD (55) située dans chaque zone destinée à observer les emplacements des dispositifs dans chaque zone.
